# EUROPEAN PATENT SPECIFICATION

(11) **EP 0 867 470 B1**
(45) Date of publication and mention of the grant of the patent: **28.05.2003**
(21) Application number: 97870039.1
(22) Date of filing: 24.03.1997
(51) Int. Cl.: C08L 5/00, A23L 1/052

(54) **Inulin based hydrocolloid compositions**
Zusammensetzungen von Inulin und Hydrokolloiden
Compositions à base d'inuline et d'hydrocolloides

(43) Date of publication of application: 30.09.1998
(73) Proprietor: Tiense Suikerraffinaderij N.V. (Raffinerie Tirlemontoise S.A.), 1150 Brussel (BE)
(72) Inventor: Frippiat, Anne, 1993 Sterrebeek (BE)
(74) Representative: Van Malderen, Joelle

(56) References cited:
- EP-A- 0 605 217
- EP-A- 0 648 425
- EP-A- 0 758 531
- US-A- 5 527 556
- CEREAL FOODS WORLD, vol. 41, no. 10, 1 October 1996, pages 792-794, XP002037124 SILVA R F: "Use of inulin as a natural texture modifier"
- LEBENSMITTELTECHNIK, vol. 27, no. 7/8, 7 August 1995, pages 39-40, XP002037125 JOHAN DE SOETE: "Inulin und Oligofruktose"

## Description

The present invention is directed to synergistic compositions of hydrocolloids, more specifically to a synergistic composition comprising a combination of inulin with another hydrocolloid.

Hydrocolloids are polymeric hydrophylic materials which may have a hydrophobic moiety and which are able to thicken or to gel aqueous systems. Hydrocolloids always impart some viscosity to aqueous solutions but only a few form a gel in water. Therefore hydrocolloids are generally classified either as thickeners (which increase the viscosity in a aqueous solution) or as gelling agents (which gel in water). A minimum concentration is often required for gelling. Hydrocolloids readily absorb water and are used largely in food products to impart smoothness, body and texture, even in concentration of less than 1%. The texture properties of the gels vary a lot with the hydrocolloid used (e.g. elastic or brittle; long or spreadable; chewy or creamy; gel strength). The other organoleptic properties such as aspect, opacity, mouthfeel, taste, etc., also depend on the hydrocolloid used.

Hydrocolloids are often used in combination. Some synergy in gel strength is known for specific couples of hydrocolloids, e.g. agar-carrageenan. However, no general synergy of a particular gelling agent with all other gelling agents has been reported.

Inulin is a mixture of oligo- and polysaccharides which are composed of fructose units linked together by β(2-1) linkages. Most molecules are terminated by a glucose unit. Inulin is formed in a large number of plants, but often only at low concentration. In certain plants however, inulin is present in appreciable amounts, e.g. in tubers of Jerusalem artichoke and dahlia and in roots of chicory from which it readily can be isolated by generally known common extraction techniques. Native chicory inulin has a degree of polymerisation (DP), i.e. a total number of fructose and glucose units per molecule, ranging mainly between 2 and 70.

Inulin used at a relatively high concentration in an aqueous liquid, for example in a concentration of 15 to 50 weight % in water, forms, generally after shearing, a creamy structure which is in fact a specific gel network, namely a particle gel.

In pure water a gel is obtained with minimum 23% RAFTILINE® ST (Orafti, containing about 92% inulin and having a <DP> of 10), (<DP> : average degree of polymerisation) or with minimum 13% RAFTILINE® HP (Orafti, containing about 100% inulin and having a <DP> of ≥23, generally a <DP> of about 25). An inulin gel is characterised by interesting organoleptic properties such as e.g. a bland taste, a nice spreadable texture, a creamy fat-like mouthfeel and a white opaque aspect, as well as by interesting nutritional properties such as e.g. a low caloric value, dietary fibre effects and prebiotic properties.

By combining inulin with one or more other hydrocolloids, new gels can be obtained showing more or less the characteristics of the separate components, depending on the respective nature and concentration of the components. The gel strength of these new gels often corresponds to the sum of the gel strengths obtained for the separate components used at the respective concentration. Sometimes the gel strength is even lower due to competition for water between the two components.

However, it is important for technical as well as for economical reasons to be able to reduce the amount of hydrocolloids needed to obtain a certain functionality. A lower concentration of hydrocolloids will reduce the ingredients cost while at the same time it will, for example in food products, minimise the possible side-effects caused by the respective hydrocolloids used on the organoleptic and nutritional properties of the food product. Other possible advantages resulting from a lower concentration of hydrocolloids can be : improvement of the production process, enhanced nutritional balance and better intestinal acceptability.

In view of the above, industry is confronted with a constant need to reduce the concentration of hydrocolloids in food products as well as in non-food products.

The patent application EP-0 648 425 is a general disclosure of hydrocolloid compositions. This document neither describes compositions in which both of the components taken separately provide gelling properties, nor describes compositions with a specific ratio of the concentration (in wt%) of inulin and a gelling agent, in combination with a specific ratio of the gel strengths of the individual components in the said concentrations.

The patent application EP-0 758 531 discloses in a generic manner a food composition which may contain pectin as a gelling agent in combination with a stabiliser (a hydrocolloid gelling agent such as for example inulin). In a preferred food composition (mayonnaise), the stabiliser can be present at a concentration ranging from 0 to 20 wt%.

The document Cereal Foods World, Vol. 41 (10), p. 792-794 (1996)) provides a generic disclosure about compositions containing inulin and other ingredients like gums and surfactants or gel forming hydrocolloids and only generically discloses that interactions of inulin with hydrocolloids can result in a system with a synergistic viscosity.

The present invention relates to a composition comprising a combination of inulin and another hydrocolloid wherein the other hydrocolloid is a gelling agent, the inulin as well as the gelling agent is at a concentration which is high enough to show gelling properties when dispersed in an aqueous medium, the ratio of the concentrations (in weight %) of inulin/gelling agent ranges from 0.05 to 500, the ratio of the gel strengths of inulin / gelling agent at said individual concentrations ranges from 0.05 to 20, and such combination, once dispersed in said aqueous medium, provides a gel having a gel strength which is higher than the sum of the gel strengths observed for the two components, inulin and the gelling agent, taken separately at the respective concentration.

This effect which clearly is a synergistic effect, is observed only when the other hydrocolloid is a gelling agent, but such synergistic effect is not observed when combining inulin with a hydrocolloid which is a recognized thickener.

Advantageously, the concentration ratio of the components is within the range varying from 0.2 to 100, more preferably within the range varying from 0.8 to 50.

Advantageously, the concentration ratio of the components is within the range at which the ratio of the gel strengths of the individual components varies from 0.05 to 20, preferably from 0.1 to 10, more preferably from 0.2 to 5.

Typical gelling agents suitable for the composition according to the present invention are starch, such as e.g. native starch and modified starch from corn, wheat, potato and pea; dextrin, such as e.g. dextrin from potato, corn and wheat; gelatin (acid and basic type gelatin) ; iota and kappa carrageenan; gellan gum; M and G type alginate; pectin, e.g. low methoxy pectin and a combination of high methoxy pectin and a sugar.

Another aspect of the present invention is related to a process for reducing the amount of hydrocolloids needed to obtain a predetermined gel strength in a food product ranging from 5 to 5000 g, or an ingredient thereof, the gel strength being measured on a Stevens Texture Analyser, characterised in that there is used in an aqueous medium a combination of inulin and another hydrocolloid, as defined previously.

A last aspect of the present invention is related to the use of inulin for the purpose of lowering the amount of gelling agent in a food or feed composition needed in order to reach a predetermined gel strength of said composition ranging from 5 to 5000 g, the gel strength being measured on a Stevens Texture Analyser, wherein said inulin is used in an aqueous medium in a combination of inulin and another hydrocolloid, as defined previously. Preferably, said food composition is chosen among the group consisting of dairy products, chilled and frozen desserts, table spreads, fruit preparations, fillings, meat products, sauces and soups, or is a spreadable food product, a table spread, a cheese spread, a chocolate spread, a fruit- or vegetable-based spread, a meat-based spread or a fish-based spread.

Advantageously, the spreadable food product is fat-reduced or fat-free.

For use according to the present invention, inulin is preferably obtained from chicory roots and has preferably an average degree of polymerisation (<DP>) of ≥ 8. Depending on the techniques used to isolate, purify and optionally to fractionate the inulin, a typical inulin having a <DP> of about 10 is obtained which is suitable for the compositions according to the invention. Another typical inulin so obtained and very suitable according to the present invention has a <DP> in the range from 10 to 50, preferably a <DP> of ≥ 15. A further such typical inulin has preferably a <DP> of 20 to 25.

The concentration of inulin and the other gelling agent has to be high enough to show gelling properties. The respective concentration ratio of the two components is also of importance for obtaining the synergistic effect : only for specific ratios synergy is observed.

The ranges of ratios where the synergistic effect occurs have been determined to incorporate the ratios of concentrations of the inulin and the other component, where the inulin and the other component, taken alone, exhibit approximately the same gel strengths, more particularly within a range where the gel strength is of interest for the food industry (e.g. a gel strength as measured on a Stevens Texture Analyser of 5 to 5000 g).

Table 1 below shows a variety of hydrocolloids which have been tested in combination with Raftiline® HP. These hydrocolloids are listed hereafter, together with the relevant trade names and producers or distributors, followed by a description of the methods A to G used for preparing the mixtures, and the systems A to C used for measuring the corresponding gel strengths.

| List of hydrocolloids | | |
|---|---|---|
| **Hydrocolloid** | **Trade name** | **Producer or distributor** |
| instant starch | Ultra Sperse 5 | National Starch |
| potatodextrin | Paselli SA2 | Avebe |
| guar gum* | TH 225 | Orffa |
| lambda-carrageenan* | Hygel KSL 81 | Hydralco |
| sodium-caseinate* | Caseinate alimentaire | Besnier Bridel Alimentaire (BBA) |
| gelatin | Rousselot voedingsgelatine 200 Bls | SBI |
| iota-carrageenan | Hygel SI 230 | Hydralco |
| kappa-carrageenan | Danagel RC Gelcarin GP 911 | Dara FMC |
| gellan gum | Kelcogel F | Kelco |
| alginate type M type G | Manugel DMB Manucol DM | Kelco |
| locust bean gum* | Standard S | Ferdiwo B.V. |
| xanthan gum * | Rhodigel | Rhône Poulenc Meyhall |
| low-methoxy-pectin | LM 104 AS | Hercules |
| carboxy-methylcellulose (CMC) * | Finnfix 50 000 ES | FMC |

| | | |
|---|---|---|
| *:comparative | | |

### Methods used for preparing the mixtures Raftiline® HP - hydrocolloid.

A)
   - Mix RAFTILINE® HP and the other hydrocolloid.
   - Disperse the mix step by step in water at 60°C (or 70°C) while shearing under a Silverson (type L4R ,running at 9,000 rpm).
   - Shear for 10 minutes at 60°C (or 70°C).
   - Centrifugate the solution for 3 minutes at 2,000 rpm (to eliminate incorporated air).
   - Pour the dispersion in (5) little beakers and store them for 24 hours at 10°C.
   - Measure the gel strength(*).
B)
   - Mix RAFTILINE® HP Gel and the other hydrocolloid.
   - Disperse the mix step by step in water at room temperature while stirring with a magnetic stirrer.
   - Stir the solution for 5 minutes at 300 rpm.
   - Centrifugate the solution for 3 minutes at 2,000 rpm (to eliminate incorporated air).
   - Pour the dispersion in (5) little beakers and store them for 24 hours at 10°C.
   - Measure the gel strength(*).
C)
   - Disperse the other hydrocolloid in water at 60°C.
   - Cool the solution down to 40°C.
   - Add RAFTILINE® HP step by step while shearing under a Silverson (type L4R , running at 9,000 rpm).
   - Shear for 12 minutes at 40°C.
   - Pour the dispersion in (5) little beakers and store them first for 48 hours at room temperature followed by 24 hours at 10°C.
   - Measure the gel strength(*).
D)
   - Disperse the other hydrocolloid in water at 75°C while shearing under a Silverson (type L4R, running at 9,000 rpm) and continue shearing for 1 minute.
   - Add 0.3% CaCl₂ powder and mix.
   - Cool the solution down to 55°C and add RAFTILINE® HP step by step while shearing under a Silverson (type L4R, running at 9,000 rpm).
   - Shear for 12 minutes at 55°C.
   - Pour the dispersion in (5) little beakers and store them for 48 hours at 10°C.
   - Measure the gel strength(*).
E)
   - Disperse the other hydrocolloid in water at 75°C while shearing under a Silverson (type L4R, running at 9,000 rpm) and continue shearing for 2 minutes.
   - Cool the solution down to 55°C and add RAFTILINE® HP step by step while shearing under a Silverson (type L4R, running at 9,000 rpm).
   - Shear for 12 minutes at 55°C.
   - Add 0.3% CaCl₂ powder 20 seconds before ending the shearing.
   - Pour the dispersion in (5) little beakers and store them for 48 hours at 10°C.
   - Measure the gel strength(*).
F)
   - Disperse the sequestrant (sodium polyphosphate) into water at room temperature.
   - Add RAFTILINE® HP step by step while shearing under a Silverson ( type L4R, running at 9,000 rpm).
   - Shear for 12 minutes at room temperature.
   - Add slowly the other hydrocolloid and shear for 2 minutes.
   - Add CaCl₂ 0.3% dry substance (already in about 5% aqueous solution) 10 seconds before ending the shearing.
   - Pour the dispersion in (5) little beakers and store them for 48 hours at 10°C.
   - Measure the gel strength(*).
G)
   - Disperse the other hydrocolloid in nearly boiling water.
   - Cool the solution down to 70°C and add RAFTILINE® HP step by step while shearing under a Silverson ( type L4R, running at 9,000 rpm).
   - Shear for 10 minutes at 70°C.
   - Pour the dispersion in (5) small plastic containers and store them for 24 hours at 5°C.
   - Measure the gel strength(*).

### (*) Measurement systems for the gel strength

A : Stevens LFRA Texture Analyser
   Probe: 1/2" diam. with radius
   Test speed : 0.2 mm/sec.
   Compression force
   Distance: 5 mm
B : Stable Micro System TA XT2i
   Probe: 1/2" diam. with radius
   Test speed : 0.2 mm/sec.
   Compression force
   Distance: 5 mm
C : Instron type 1120
   Cylindrical probe of 20 mm diam.
   Test speed: 200 mm/min.
   Compression force
   Distance: 9 mm

**Table 1**

| Mixtures of Inulin (Raftiline® HP) with another hydrocolloid. | | |
|---|---|---|
| **Hydrocolloid** | **Method** | **Measuring system** |
| instant starch | A/ 60°C | B |
| potatodextrin | A/ 60°C | A |
| guar gum * | B | A |
| lambda-carrageenan* | A/ 60°C | A |
| sodium-caseinate * | A/ 60°C | B |
| gelatin | C | A |
| iota-carrageenan | D | A |
| kappa-carrageenan | D | A |
| gellan gum | E | A |
| alginate | F | A |
| locust bean gum* | G | C |
| xanthan gum* | G | C |
| LM-pectin | A/ 70°C | B |
| CMC * | A/ 70°C | B |

| | | |
|---|---|---|
| * : comparative | | |

Table 2 below shows the experimental results for the mixtures shown in Table 1 in terms of the concentrations where synergy has been or has not been observed.

**Table 2**

| **Hydrocolloid** | **ratio for max. synergy** ****** | **Gelifier (G) or thickener (T)** | **Ratio for synergy with RAFTILINE HP** ****** **(conc. tested)** | **Ratio for no synergy with RAFTILINE HP** ****** **(conc. tested)** |
|---|---|---|---|---|
| instant starch Ultra-Sperse 5 | 5 | G | 5 (22/4.4) | 3.5 - 4.2 (15/4.3 - 19/4.5) |
| potatodextrin Paselli SA2 | 0.8 | G | 0.2 - 1.25 (6/20 - 6/30 - 15/20 -15/30 - 25/20 - 25/30) | 2.5 - 4.2 (15/6 - 25/6) |
| guar gum * | - | T | | 12 - 50 (6/0.5 - 15/0.5 - 25/0.5) |
| lambda-carrageenan * | - | T | | 6 - 25 (6/1 - 15/1 - 25/1) |
| Na-caseinate * | - | T | | 0.4 - 4.2 (6/6 - 6/15 - 15/6 - 15/15 - 25/6) |
| gelatin | 2 | G | 2 - 7.5 (10/2 - 10/5 - 15/2 - 15/5 - 20/5) | 10 (20/2) |
| iota-carrageenan | 20 | G | 10 - 20 (10/0.5 - 10/1 - 15/1 - 20/1) | 30 - 40 (15/0.5 - 20/0.5) |
| kappa-carrageenan | 30 | G | 20 - 40 (10/0.5 - 15/0.5 - 20/0.5 - 20/1) | 10 - 15 (10/1 - 15/1) |
| gellan gum | 50 | G | 33 - 100 (10/0.1 - 10/0.3 - 15/0.3 - 20/0.3) | 150 - 200 (15/0.1 - 20/0.1) |
| alginate | 15 | G | 10 - 40 (10/0.5 - 10/1 - 15/0.5 - 15/1 - 20/0.5 - 20/1) | |
| locust bean gum * | - | T | | 8 - 40 (4/0.5 - 20/0.5) |
| xanthan gum * | - | T | | 8 - 40 (4/0.1 - 4/0.5 - 20/0.5) |
| LM-pectin (+CaCO₃) | 8.5 | G | 8.5 (25/3) | 2 - 5 & 10 (6/3 - 15/3 - 30/3) |
| CMC * | - | T | | 12 - 50 (6/0.5 - 15/0.5 - 25/0.5) |

| | | | | |
|---|---|---|---|---|
| * comparative | | | | |
| ** ratios are expressed as : % Raftiline® HP (W/W) / % other hydrocolloid (W/W) | | | | |

In accordance with the invention, as is clearly shown by the results given in Table 2, only recognised gelling agents are able to provide a synergistic effect when combined with inulin. Guar gum, lambda-carrageenan, Na-caseinate, locust bean gum, xanthan gum and CMC are recognised thickeners and show no synergistic effect when combined with inulin. For gelling agents, as is apparent from the fourth and fifth column of Table 2, the effect is generally observed only for specific concentration ratios.

Such concentration ratios in % (w/w) vary, depending on the specific gelling agent from 0.05 to 500, most often from 0.2 to 100 (maximum effect from 0.8 to 50).

The maximum observed degree of synergy is quite significant. It is generally around 200 %, but may be as high as 1500 % for dextrin.

Table 3 below displays the extent of the synergistic effect for the combination of 7 gelling agents with inulin.

The range of concentrations where synergy is observed is also reported in terms of ratios of the gel strengths of the individual components (Raftiline® HP/Hydrocolloid). These ratios of gel strengths vary generally from 0.05 to 20, preferably from 0.1 to 10, more preferably from 0.2 to 5.0.

Maximum synergy is observed for ratios of the concentrations where the ratios of the corresponding gel strengths are as disclosed above.

**Table 3**

| GELLING AGENT | EXTENT OF SYNERGISTIC EFFECT* IN GEL STRENGTHS % | RATIO OF INDIVIDUAL GEL STRENGTHS FOR SYNERGY |
|---|---|---|
| gelatin | 110-200 | 0.2 - 5.8 |
| gellan gum | 110-200 | 0.2 - 2.8 |
| alginate | 150-300 | 0.1 - 5.4 |
| kappa carrageenan | 110-200 | 0.15-12.1 |
| iota carrageenan | 110-200 | 0.1 - 4.2 |
| potatodextrin | 200-1500 | 0.2 - 4.4 |
| pectin | 110-130 | 2.0 - 8.3 |

| | | |
|---|---|---|
| * Resulting gel strength of the combination calculated as a percentage of the sum of the gel strengths of the individual components. | | |

The compositions according to the present invention are of technical and/or economical interest for use in food and feed applications as well as in non-food applications.

The use of inulin in combination with said another hydrocolloid in the above defined concentrations and concentration ratios enables to lower the necessary amount of gelling agent in a food or feed composition to reach a predetermined gel strength of said composition.

Interesting food applications of the compositions according to the present invention are, for example, low-fat and non-fat table spreads, dairy products (e.g. yoghurts, desserts, cheeses), salad-dressings, prepared meat products (sausages, pâté), fillings, toppings and frozen desserts.

The invention is therefore also directed to a process for reducing the amount of hydrocolloids needed to obtain a predetermined gel strength in a food product, or an ingredient thereof. According to this process there is used in an aqueous medium a combination of inulin and another hydrocolloid, said hydrocolloid being a gelling agent and being used at a specific concentration ratio with the inulin where a synergistic effect between the inulin and the other hydrocolloid on the gel strength of the composition is provided. Preferably the other hydrocolloid is chosen among the group consisting of gelling agents such as e.g. starch, dextrin, gelatin, iota carrageenan, kappa carrageenan, gellan gum, alginate and pectin.

The invention is also directed to the use of inulin for the purpose of lowering the amount of gelling agent in a food or feed composition in order to reach a predetermined gel strength of said composition. The food composition may be dairy products, chilled and frozen desserts, table spreads, fruit preparations, fillings, meat products, sauces and soups. The composition may also be a spreadable food product, such as e.g. a table spread, a cheese spread, a chocolate spread, a fruit- or vegetable-based spread, a meat-based spread or a fish-based spread.

## Claims

1. A composition comprising a combination of inulin and another hydrocolloid, **characterised in that** the other hydrocolloid is a gelling agent, that the inulin as well as the gelling agent is at a concentration which is high enough to show gelling properties when dispersed in an aqueous medium, that the ratio of the concentrations (in weight %) of inulin / gelling agent ranges from 0.05 to 500, that the ratio of the gel strengths of inulin / gelling agent at said individual concentrations ranges from 0.05 to 20, and **in that** such combination, once dispersed in said aqueous medium, provides a gel having a gel strength which is higher than the sum of the gel strengths observed for the two components, inulin and the gelling agent, taken separately at the respective concentration..

2. A composition as claimed in claim 1 wherein the concentration ratio of the components is within the range varying from 0.2 to 100.

3. A composition as claimed in claim 1 wherein the concentration ratio of the components is within the range varying from 0.8 to 50.

4. A composition as claimed in any of claims 1 to 3 wherein the concentration ratio of the components is within the range at which the ratio of the gel strengths of the individual components varies from 0.1 to 10.

5. A composition as claimed in any of claims 1 to 3 wherein the concentration ratio of the components is within the range at which the ratio of the gel strengths of the individual components varies from 0.2 to 5.

6. A composition as claimed in any of the preceding claims 1 to 5, wherein the inulin is obtained from chicory roots or from tubers of dahlia or of Jerusalem artichoke,

7. A composition as claimed in claim 6 wherein the inulin is chicory inulin of a degree of polymerisation (DP) ranging from 2 to 70.

8. A composition as claimed in claim 6, wherein the inulin is chicory inulin having an average degree of polymerisation (<DP>) of ≥ 8, or of ≥ 15 or of ≥ 23.

9. A composition as claimed in any of the preceding claims 1 to 8, wherein the other hydrocolloid is pectin.

10. A composition as claimed in any of the preceding claims 1 to 8, wherein the other hydrocolloid is starch or dextrin.

11. A composition as claimed in any of the preceding claims 1 to 8, wherein the other hydrocolloid is kappa or iota carrageenan.

12. A composition as claimed in any of the preceding claims 1 to 8, wherein the other hydrocolloid is alginate.

13. A composition as claimed in any of the preceding claims 1 to 8, wherein the other hydrocolloid is gellan gum.

14. A composition as claimed in any of the preceding claims 1 to 8, wherein the other hydrocolloid is gelatin.

15. A process for reducing the amount of hydrocolloids needed to obtain a predetermined gel strength in a food product ranging from 5 to 5000 g, or an ingredient thereof, the gel strength being measured on a Stevens Texture Analyser, **characterised in that** there is used in an aqueous medium a combination of inulin and another hydrocolloid, as defined in any one of claims 1 to 14.

16. A process according to claim 15 wherein the other hydrocolloid is chosen among the group consisting of :
starch, dextrin, gelatin, iota carrageenan, kappa carrageenan, gellan gum, alginate, pectin.

17. Use of inulin for the purpose of lowering the amount of gelling agent in a food or feed composition needed in order to reach a predetermined gel strength of said composition ranging from 5 to 5000 g, the gel strength being measured on a Stevens Texture Analyser, **characterised in that** said inulin is used in an aqueous medium in a combination of inulin and another hydrocolloid, as defined in any one of claims 1 to 14.

18. Use according to claim 17 where the food composition is chosen amongst dairy products, chilled and frozen desserts, table spreads, fruit preparations, fillings, meat products, sauces and soups.

19. Use according to claim 17 where the composition is a spreadable food product, a table spread, a cheese spread, a chocolate spread, a fruit- or vegetable-based spread, a meat-based spread or a fish-based spread.

20. Use according to claim 19 where the spreadable food product is fat-reduced or fat-free.

## Patentansprüche

1. Zusammensetzung, die eine Kombination aus Inulin und aus einem anderen Hydrokolloid enthält, **dadurch gekennzeichnet, dass** das andere Hydrokolloid ein Geliermittel ist, dass sowohl das Inulin als auch das Geliermittel in einer Konzentration vorliegen, die hoch genug ist, um Geliereigenschaften zu zeigen, wenn dieselben in einem wässrigen Medium dispergiert werden, dass das Verhältnis der Konzentrationen (in Gew.-%) von Inulin / Geliermittel von 0,05 bis zu 500 reicht, dass das Verhältnis der Gelstärken von Inulin / Geliermittel bei den besagten individuellen Konzentrationen von 0,05 bis zu 20 reicht, und dass solch eine Kombination, wenn sie erst einmal in dem besagten wässrigen Medium dispergiert ist, ein Gel liefert mit einer Gelstärke, die größer ist als die Summe der Gelstärken, welche für die beiden Komponenten beobachtet werden, nämlich das Inulin und das Geliermittel, wenn dieselben getrennt bei den jeweiligen Konzentrationen genommen werden.

2. Zusammensetzung gemäss Anspruch 1, wobei das Verhältnis der Konzentration der Komponenten innerhalb des Bereiches liegt, der von 0,2 bis zu 100 variiert.

3. Zusammensetzung gemäss Anspruch 1, wobei das Verhältnis der Konzentration der Komponenten innerhalb des Bereiches liegt, der von 0,8 bis zu 50 variiert.

4. Zusammensetzung gemäss irgendeinem der Ansprüche 1 bis 3, wobei das Verhältnis der Konzentration der Komponenten innerhalb des Bereiches liegt, in dem das Verhältnis der Gelstärken der einzelnen Komponenten von 0,1 bis zu 10 variiert.

5. Zusammensetzung gemäss irgendeinem der Ansprüche 1 bis 3, wobei das Verhältnis der Konzentration der Komponenten innerhalb des Bereiches liegt, in dem das Verhältnis der Gelstärken der einzelnen Komponenten von 0,2 bis zu 5 variiert.

6. Zusammensetzung gemäss irgendeinem der vorhergehenden Ansprüche 1 bis 5, wobei das Inulin aus Zichorienwurzeln oder aus Knollen von Dahlien oder von Erdartischocken gewonnen wird.

7. Zusammensetzung gemäss Anspruch 6, wobei es sich bei dem Inulin um Zichorieninulin handelt, dessen Polymerisationsgrad (DP)=(degree of polymerisation) von 2 bis zu 70 reicht.

8. Zusammensetzung gemäss Anspruch 6, wobei es sich bei dem Inulin um Zichorieninulin handelt, dessen durchschnittlicher Polymerisationsgrad (<DP>) bei 8, oder 15 oder 23 liegt.

9. Zusammensetzung gemäss irgendeinem der vorhergehenden Ansprüche 1 bis 8, wobei es sich bei dem anderen Hydrokolloid um Pektin handelt.

10. Zusammensetzung gemäss irgendeinem der vorhergehenden Ansprüche 1 bis 8, wobei es sich bei dem anderen Hydrokolloid um Stärke oder Dextrin handelt.

11. Zusammensetzung gemäss irgendeinem der vorhergehenden Ansprüche 1 bis 8, wobei es sich bei dem anderen Hydrokolloid um Kappa- oder Iota-Karrageen handelt.

12. Zusammensetzung gemäss irgendeinem der vorhergehenden Ansprüche 1 bis 8, wobei es sich bei dem anderen Hydrokolloid um Alginat handelt.

13. Zusammensetzung gemäss irgendeinem der vorhergehenden Ansprüche 1 bis 8, wobei es sich bei dem anderen Hydrokolloid um Gellan handelt.

14. Zusammensetzung gemäss irgendeinem der vorhergehenden Ansprüche 1 bis 8, wobei es sich bei dem anderen Hydrokolloid um Gelatine handelt.

15. Verfahren zur Verminderung der Menge an Hydrokolloiden, die benötigt werden, um eine vorherbestimmte Gelstärke in einem Nahrungsmittelprodukt zu erhalten, die von 5 bis zu 5000 g reicht, oder ein Ingrediens davon, wobei die Gelstärke mit Hilfe eines Stevens Texture Analyser gemessen wird, **dadurch gekennzeichnet, dass** in einem wässrigen Medium eine Kombination von Inulin und einem anderen Hydrokolloid verwendet wird, wie dieselbe in irgendeinem der Ansprüche 1 bis 14 definiert worden ist.

16. Verfahren gemäss Anspruch 15, wobei das andere Hydrokolloid ausgewählt wird aus der Gruppe bestehend aus: Stärke, Dextrin, Gelatine, Iota-Karrageen, Kappa-Karrageen, Gellan, Alginat, Pektin.

17. Verwendung des Inulins für den Zweck der Verminderung der Menge an Geliermittel in einer Nahrungsmittelzusammensetzung oder in einer Futterzusammensetzung, die benötigt wird, um eine vorherbestimmte Gelstärke der besagten Zusammensetzung in dem Bereich von 5 bis zu 5000 g zu erreichen, wobei die Gelstärke mit Hilfe eines Stevens Texture Analyser gemessen wird, **dadurch gekennzeichnet, dass** das besagte Inulin in einem wässrigen Medium in einer Kombination von Inulin und einem anderen Hydrokolloid verwendet wird, wie dieselbe in irgendeinem der Ansprüche 1 bis 14 definiert worden ist.

18. Verwendung gemäss Anspruch 17, wobei die Nahrungsmittelzusammensetzung aus Molkereiprodukten, gekühlten und gefrorenen Nachtischgerichten, Aufstrichen, Fruchtzubereitungen, Füllungen, Fleischprodukten, Soßen und Suppen ausgewählt wird.

19. Verwendung gemäss Anspruch 17, wobei die Zusammensetzung ein streichfähiges Nahrungsmittelprodukt, ein Aufstrich, ein Streichkäse, Schokoladenaufstrich, ein auf Früchten oder auf Gemüse beruhender Aufstrich, ein auf Fleisch beruhender Aufstrich oder ein auf Fisch beruhender Aufstrich ist.

20. Verwendung gemäss Anspruch 19, wobei das streichfähige Nahrungsmittelprodukt einen verminderten Fettgehalt aufweist oder fettfrei ist.

## Revendications

1. Composition comprenant une combinaison d'inuline et d'un autre hydrocolloïde, **caractérisée en ce que** l'autre hydrocolloïde est un agent gélifiant, **en ce que** l'inuline ainsi que l'agent gélifiant ont une concentration qui est suffisamment élevée pour présenter des propriétés gélifiantes lorsqu'ils sont dispersés dans un milieu aqueux, **en ce que** le rapport de concentration (en % en poids) d'inuline/agent gélifiant se situe dans une plage de 0,05 à 500, **en ce que** le rapport des solidités de gel de l'inuline/agent gélifiant auxdites concentrations individuelles se situe dans une plage de 0,05 à 20, et **en ce que** cette combinaison, une fois dispersée dans ledit milieu aqueux, donne un gel ayant une solidité de gel qui est supérieure à la somme des solidités de gel observées pour les deux composants, l'inuline et l'agent gélifiant, pris séparément à la concentration respective.

2. Composition selon la revendication 1, dans laquelle le rapport de concentration des composants se situe dans la plage variant de 0,2 à 100.

3. Composition selon la revendication 1, dans laquelle le rapport de concentration des composants se situe dans la plage variant de 0,8 à 50.

4. Composition selon l'une quelconque des revendications 1 à 3, dans laquelle le rapport de concentration des composants se situe dans la plage à laquelle le rapport des solidités de gel des composants individuels varie de 0,1 à 10.

5. Composition selon l'une quelconque des revendications 1 à 3, dans laquelle le rapport de concentration des composants se situe dans la plage à laquelle le rapport des solidités de gel des composants individuels varie de 0,2 à 5.

6. Composition selon l'une quelconque des revendications précédentes 1 à 5, dans laquelle l'inuline est obtenue à partir de racines de chicorée ou de tubercules de dahlia ou de topinambour.

7. Composition selon la revendication 6, dans laquelle l'inuline est l'inuline de chicorée ayant un degré de polymérisation (DP) dans une plage de 2 à 70.

8. Composition selon la revendication 6, dans laquelle l'inuline est l'inuline de chicorée ayant un degré moyen de polymérisation (<DP>) de ≥ 8, ou de ≥ 15 ou de ≥ 23.

9. Composition selon l'une quelconque des revendications précédentes 1 à 8, dans laquelle l'autre hydrocolloide est la pectine.

10. Composition selon l'une quelconque des revendications précédentes 1 à 8, dans laquelle l'autre hydrocolloïde est l'amidon ou la dextrine.

11. Composition selon l'une quelconque des revendications précédentes 1 à 8, dans laquelle l'autre hydrocolloïde est le kappa- ou le iota-carrageenan.

12. Composition selon l'une quelconque des revendications précédentes 1 à 8, dans laquelle l'autre hydrocolloïde est un alginate.

13. Composition selon l'une quelconque des revendications précédentes 1 à 8, dans laquelle l'autre hydrocolloïde est la gomme gellane.

14. Composition selon l'une quelconque des revendications précédentes 1 à 8, dans laquelle l'autre hydrocolloïde est la gélatine.

15. Procédé de réduction de la quantité d'hydrocolloïdes nécessaires pour obtenir une solidité de gel prédéterminée dans un produit alimentaire dans une plage de 5 à 5000 g, ou un de ses ingrédients, la solidité de gel étant mesurée sur un analyseur de texture de Stevens, **caractérisé en ce que** l'on utilise, dans un milieu aqueux, une combinaison d'inuline et d'un autre hydrocolloïde, comme défini selon l'une quelconque des revendications 1 à 14.

16. Procédé selon la revendication 15, dans lequel l'autre hydrocolloïde est choisi parmi le groupe constitué de : l'amidon, la dextrine, la gélatine, le iota-carrageenan, le kappa-carrageenan, la gomme gellane, les alginates et la pectine.

17. Utilisation d'inuline dans le but de diminuer la quantité d'agent gélifiant nécessaire dans une composition alimentaire destinée à l'homme ou à l'animal afin d'atteindre une solidité de gel prédéterminée de ladite composition dans une plage de 5 à 5000 g, la solidité de gel étant mesurée sur un analyseur de texture de Stevens, **caractérisée en ce que** ladite inuline est utilisée dans un milieu aqueux dans une combinaison d'inuline et d'un autre hydrocolloïde, comme défini selon l'une quelconque des revendications 1 à 14.

18. Utilisation selon la revendication 17, dans laquelle la composition alimentaire est choisie parmi les produits laitiers, les desserts glacés et surgelés, les pâtes à tartiner, les préparations de fruits, les farces, les produits de viande, les sauces et les soupes.

19. Utilisation selon la revendication 17, dans laquelle la composition est un produit alimentaire à tartiner, une pâte à tartiner, un fromage à tartiner, une pâte à tartiner au chocolat, une pâte à tartiner à base de fruits ou de légumes, une pâte à tartiner à base de viande ou une pâte à tartiner à base de poisson.

20. Utilisation selon la revendication 19, dans laquelle le produit alimentaire à tartiner a une teneur réduite ou nulle en matières grasses.
